# EUROPEAN PATENT APPLICATION

(11) **EP 4 790 089 A1**
(43) Date of publication of application: **12.08.2026**
(21) Application number: 24874559.8
(22) Date of filing: 27.09.2024
(51) Int. Cl.: C08L 7/00, C08J 3/20, C08K 3/04, C08K 3/22, C08K 5/25, F16F 7/00, F16F 15/08

(54) **VIBRATION-DAMPING RUBBER COMPOSITION AND PRODUCTION METHOD FOR SAME**

(30) Priority: 04.10.2023 JP 2023172958
(71) Applicant: Prospira Corporation, Kanagawa prefecture 212-0013 (JP)
(72) Inventor: WADA, Emiko, Kawasaki city, Kanagawa 212-0013 (JP)
(74) Representative: Mewburn Ellis LLP
(86) International application number: PCT/JP2024/034721
(87) International publication number: WO 2025/074955

(57) **Abstract**

An object of the present invention is to provide a vibration-damping rubber composition that enables the production of a vibration-damping rubber member having a low dynamic-to-static modulus ratio and excellent vibration-damping properties and also exhibits excellent processability, as well as a method for producing the same. The present invention provides a vibration-damping rubber composition obtained in accordance with a production method including a first step of kneading a component a, which is a diene-based rubber, a component b, which is a filler containing carbon black, and a component c, which is a specific monohydrazide compound, at a temperature of 130°C or higher and 180°C or lower to obtain a first kneaded product, and a second step of kneading the first kneaded product with a component d, which is zinc oxide, to obtain a second kneaded product.

## Description

### Technical Field

The present invention relates to a vibration-damping rubber composition used in the production of a vibration-damping rubber member for automobiles and the like, as well as a method for producing the same.

### Background Art

Conventionally, in various types of vehicles such as automobiles, for the purpose of improving passenger comfort, vibration-damping materials have been arranged at locations that serve as sources of vibration and noise, in an attempt to reduce the intrusion of vibration and noise into the cabin. For example, with respect to the engine, which is a primary source of vibration and noise, vibration-damping rubber is used in constituent members such as torsional dampers, engine mounts, and muffler hangers to absorb vibrations generated during engine operation, thereby reducing the intrusion of vibration and noise into the cabin and the dispersion of noise into the surrounding environment.

As fundamental characteristics of such vibration-damping rubber, it is required to have high support performance for bearing heavy components such as engines, as well as high vibration-damping performance to absorb and suppress their vibrations. Accordingly, methods for achieving a lower dynamic-to-static modulus ratio have conventionally been explored.

Generally, when fillers such as carbon black and silica are sufficiently dispersed in a rubber composition, the dynamic modulus decreases, and accordingly, the dynamic-to-static modulus ratio decreases. However, although extending the kneading time improves dispersion and can reduce the dynamic modulus, it may also cause breakage of polymer molecular chains, which can soften the rubber composition and potentially impair its support properties.

In order to reduce the dynamic-to-static modulus ratio while maintaining the support properties of the rubber composition, a dispersant is used. The dispersant is believed to adsorb onto (or chemically bond with) carbon black and silica (and polymers), thereby suppressing the re-agglomeration of these fillers and reducing the dynamic-to-static modulus ratio of the rubber composition. For example, Patent Literature 1 contains a description to the effect that the dynamic-to-static modulus ratio can be reduced by crosslinking carbon black and diene-based rubber using a coupling agent.

Furthermore, for the purpose of suppressing the re-agglomeration of fillers, a method of adding a hydrazide compound to a rubber composition is known. For example, Patent Literature 2 and Patent Literature 3 disclose vibration-damping rubber compositions containing specific dihydrazide compounds.

### Citation List

### Patent Literature

Patent Literature 1: JP 2019-178199A
Patent Literature 2: US 2021/0371626A1
Patent Literature 3: JP 2021-155643A

### Summary of Invention

However, hydrazide compounds are highly reactive, and particularly when polyfunctional compounds such as dihydrazide compounds are used, a reaction similar to crosslinking may proceed within the rubber composition, resulting in increased viscosity and, in some cases, causing problems in terms of processability and the like.

Therefore, an object of the present invention is to provide a vibration-damping rubber composition that enables the production of a vibration-damping rubber member having a low dynamic-to-static modulus ratio and excellent vibration-damping properties and also exhibits excellent processability, as well as a method for producing the same.

In order to achieve the above-described object, the inventor of the present invention conducted intensive research and found that the use of a monofunctional hydrazide compound is suitable for obtaining a rubber composition capable of producing a vibration-damping rubber member with high vibration-damping properties while suppressing troubles such as thickening. Furthermore, the inventor of the present invention found that adopting a specific production method can further enhance the vibration-damping properties. Thus, the present invention was achieved.

The present invention provides a vibration-damping rubber composition obtained in accordance with a production method comprising:
a first step of kneading a component a, a component b, and a component c below at a temperature of 130°C or higher and 180°C or lower to obtain a first kneaded product, and
a second step of kneading the first kneaded product with a component d below to obtain a second kneaded product,

wherein the component a is a diene-based rubber,
the component b is a filler containing carbon black,
the component c is a hydrazide compound represented by a formula (1) or (2) below; and
the component d is zinc oxide.

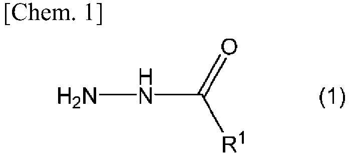

In the formula above, R¹ represents an alkyl group having 1 to 20 carbon atoms or an aryl group having 6 to 20 carbon atoms.

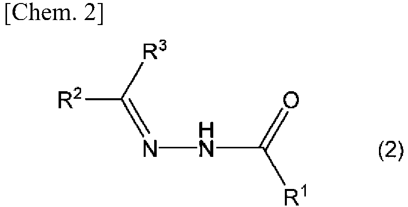

In the formula above, R¹ represents an alkyl group having 1 to 20 carbon atoms or an aryl group having 6 to 20 carbon atoms, and
R² and R³ each independently represent an alkyl group having 1 to 20 carbon atoms.

### Description of Embodiments

The vibration-damping rubber composition of the present invention is obtained in accordance with a production method including the first step of kneading the components a, b, and c at a temperature of 130°C or higher and 180°C or lower to obtain a first kneaded product and the second step of kneading the first kneaded product with the component d to obtain a second kneaded product.

The hydrazide group contained in the hydrazide compound, which serves as the component c, is highly reactive with functional groups such as ketones and aldehydes. Therefore, it is considered that, in the first step, the hydrazide compound reacts with residual functional groups on the surface of the carbon black and becomes attached to the surface, thereby dispersing carbon black agglomerates and exerting an effect of suppressing the re-agglomeration.

However, when carbon black, a hydrazide compound, and zinc oxide are simultaneously added and kneaded, the hydrazide compound and zinc oxide readily form complexes, resulting in insufficient progress of the reaction between the hydrazide compound and the carbon black. Consequently, the effect of dispersing the carbon black is not sufficiently exhibited. Accordingly, the inventor of the present invention considers that allowing the hydrazide compound to react with the carbon black in the absence of zinc oxide as in the present invention improves the dispersibility of the carbon black in the rubber component, so that the effect of achieving a lower dynamic-to-static modulus ratio can be sufficiently exhibited.

Thus, it is considered that the vibration-damping rubber composition of the present invention enables the production of a vibration-damping rubber member having a low dynamic-to-static modulus ratio due to the dispersion state of carbon black. However, the task of qualitatively and/or quantitatively identifying the dispersion state of carbon black requires an excessively long time or similar burdens and is entirely impractical. Accordingly, in the present invention, circumstances exist where the vibration-damping rubber composition has to be identified based on its production method, rather than by identifying the dispersion state of carbon black.

The vibration-damping rubber composition of the present invention contains the component a, which is a diene-based rubber, as the rubber component.

Examples of the diene-based rubber include natural rubber (NR), isoprene rubber (IR), butadiene rubber (BR), styrene-butadiene rubber (SBR), and acrylonitrile-butadiene rubber (NBR). In the present invention, it is preferable to use natural rubber from the viewpoint of achieving a lower dynamic-to-static modulus ratio.

As the natural rubber, a known material can be appropriately selected and used. For example, the natural rubber may be selected from RSS (ribbed smoked sheets), TSR (technically specified rubber), or the like. The content of the natural rubber in the component a is preferably 50 mass% or more, more preferably 70 mass% or more, and particularly preferably 90 mass% or more. One type of natural rubber may be used alone, or two or more types may be used in combination.

The vibration-damping rubber composition of the present invention may also contain a non-diene-based rubber as the rubber component.

Examples of the non-diene-based rubber include halogenated butyl rubber, such as butyl rubber (IIR), chlorinated butyl rubber (CIIR), and brominated butyl rubber (BIIR); ethylene-propylene rubber (EPM); ethylene-propylene-diene rubber (EPDM); ethylene-acrylic rubber (AEM); polyacrylic rubber (ACM); silicone rubber (VMQ); fluororubber (FKM); polyurethane rubber (AU); ester-based polyurethane rubber (EU); polyether ether ketone rubber (PEEK); and the like. In the present invention, it is preferable that the content of the non-diene-based rubber in the rubber component is 10 mass% or less, and it is more preferable that no non-diene-based rubber is contained.

The vibration-damping rubber composition of the present invention contains the component b, which is a filler containing carbon black.

The carbon black to be used may be of any known type and is not particularly limited. Examples of the carbon black include various grades of carbon black, such as SRF, GPF, FEF, HAF, ISAF, SAF, FT, and MT grades. In the present invention, FEF-grade carbon black can be suitably used from the viewpoint of achieving a lower dynamic-to-static modulus ratio. One type of carbon black may be used alone, or two or more types may be used in combination.

As fillers other than carbon black, inorganic fillers such as silica may be used.

The silica may be of any known type, including wet silica, dry silica, and colloidal silica. The BET specific surface area of the silica is preferably 70 to 230 m²/g. One type of silica may be used alone, or two or more types may be used in combination.

When the component b contains silica, it is preferable to add a silane coupling agent from the viewpoint of improving dispersibility and reinforcing properties. The silane coupling agent to be used may be any known silane coupling agent and is not particularly limited. Examples of the silane coupling agent include a mercapto-based silane coupling agent, a sulfide-based silane coupling agent, an amine-based silane coupling agent, an epoxy-based silane coupling agent, a vinyl-based silane coupling agent, and the like. One silane coupling agent may be used alone, or two or more may be used in combination. The amount of the silane coupling agent used is preferably 1 to 20 mass%, more preferably 5 to 15 mass%, relative to the silica content.

The content of the carbon black in the component b is preferably 30 mass% or more, and more preferably 50 mass% or more. The blending amount of the component b is preferably 10 to 80 parts by mass, and more preferably 30 to 60 parts by mass, relative to 100 parts by mass of the rubber component.

The vibration-damping rubber composition of the present invention contains the component c, which is a hydrazide compound represented by the formula (1) or (2) below.

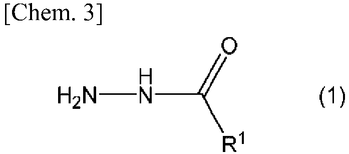

In the formula above, R¹ represents an alkyl group having 1 to 20 carbon atoms or an aryl group having 6 to 20 carbon atoms.

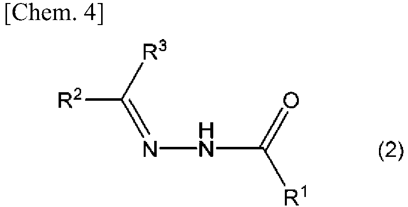

In the formula above, R¹ represents an alkyl group having 1 to 20 carbon atoms or an aryl group having 6 to 20 carbon atoms, and R² and R³ each independently represent an alkyl group having 1 to 20 carbon atoms.

Examples of the alkyl group having 1 to 20 carbon atoms in the formulae (1) and (2) include linear alkyl groups, such as methyl, ethyl, propyl, butyl, hexyl, heptyl, octyl, nonyl, decyl, dodecyl, tridecyl, tetradecyl, pentadecyl, hexadecyl, heptadecyl, and octadecyl; and branched alkyl groups, such as iso-propyl, sec-butyl, tert-butyl, iso-butyl, iso-pentyl, tert-pentyl, 2-hexyl, 3-hexyl, 2-heptyl, 3-heptyl, iso-heptyl, tert-heptyl, iso-octyl, tert-octyl, 2-ethylhexyl, and isononyl.

Examples of the aryl group having 6 to 20 carbon atoms in the above formula (2) include monocyclic aryl groups, such as phenyl, tolyl, xylyl, ethylphenyl, and 2,4,6-trimethylphenyl; and fused-ring aryl groups, such as naphthyl, anthracenyl, phenanthryl, pyrenyl, fluorenyl, and indenofluorenyl.

The alkyl group having 1 to 20 carbon atoms and the aryl group having 6 to 20 carbon atoms in the formulae (1) and (2) may have a substituent. Examples of the substituent include a halogen atom, a cyano group, a nitro group, a hydroxyl group, an amino group, and a carboxy group.

In the present invention, it is preferable to use a hydrazide compound represented by the formula (2). The hydrazide compound represented by the formula (2) can be obtained by reacting a hydrazide compound represented by the formula (1) with a ketone or an aldehyde. This reaction converts the amino group into an imino group, thereby suppressing reactivity. As a result, unintended reactions of the hydrazide compound with other compounds are prevented, and a vibration-damping rubber composition with improved carbon black dispersibility can be stably obtained.

R¹ in the formula (2) is preferably an aryl group having 6 to 20 carbon atoms, preferably a phenyl substituted with a hydroxyl group or naphthyl group substituted with a hydroxyl group, and preferably a naphthyl group substituted with a hydroxyl group. Furthermore, R² and R³ are each independently preferably an alkyl group having 1 to 10 carbon atoms, and preferably an alkyl group having 1 to 5 carbon atoms.

In particular, it is preferable that the hydrazide compound serving as the component c is N'-(1,3-dimethylbutylidene)-3-hydroxy-2-naphthohydrazide.

The blending amount of the component c is preferably 0.1 to 10 parts by mass, and more preferably 0.5 to 5 parts by mass, relative to 100 parts by mass of the component b.

The vibration-damping rubber composition of the present invention is obtained in accordance with the production method including the step (first step) of kneading the above-described components a, b, and c at a temperature of 130°C or higher and 180°C or lower to obtain a first kneaded product. The kneading temperature in the first step is more preferably 130°C or higher and 160°C or lower. The kneading time is preferably 1 minute or longer and 10 minutes or shorter, and more preferably 1 minute or longer and 5 minutes or shorter. It should be noted that the kneading temperature refers to the final temperature reached during kneading.

For kneading, a kneader, such as a roll, an internal mixer, or a Banbury rotor, may be used. Furthermore, when molding into a sheet or strip shape, or the like, any known molding machine such as an extruder or a press may be used.

The vibration-damping rubber composition of the present invention is obtained in accordance with the production method including the step (second step) of kneading the first kneaded product with the component d, which is zinc oxide, to obtain a second kneaded product. The kneading temperature in the second step is preferably 60°C or higher and 120°C or lower, and more preferably 80°C or higher and 110°C or lower. The kneading time is preferably 1 minute or longer and 10 minutes or shorter, and more preferably 1 minute or longer and 5 minutes or shorter.

As the zinc oxide, any known materials, such as zinc white and activated zinc oxide, may be used. The blending amount of the zinc oxide is preferably 1 to 10 parts by mass, and more preferably 2 to 8 parts by mass, relative to 100 parts by mass of the rubber component in the vibration-damping rubber composition.

It is preferable that the vibration-damping rubber composition of the present invention also contains a component e, which is a vulcanizing agent, and a component f, which is a vulcanization accelerator, and the components d, e, and f may be added to the first kneaded product and kneaded to obtain a second kneaded product.

Examples of the vulcanizing agent include sulfur and sulfur-containing compounds such as an alkylphenol disulfide compound. In the present invention, it is preferable to use sulfur. The blending amount of sulfur is typically 0.1 to 10 parts by mass, preferably 0.3 to 5 parts by mass, and more preferably 0.5 to 2 parts by mass, relative to 100 parts by mass of the rubber component in the vibration-damping rubber composition, because this amount is capable of favorably maintaining the desired hardness, tensile properties, and other fundamental physical properties. Furthermore, a peroxide such as a dialkyl peroxide or a peroxy ketal may also be used as the vulcanizing agent. In this case, the blending amount of the peroxide is typically 1.0 to 10 parts by mass, and preferably 2.0 to 8 parts by mass, relative to 100 parts by mass of the rubber component in the vibration-damping rubber composition.

Examples of the vulcanization accelerator include benzothiazole-based vulcanization accelerators such as 2-mercaptobenzothiazole, dibenzothiazyl disulfide, N-cyclohexyl-2-benzothiazylsulfenamide, N-t-butyl-2-benzothiazylsulfenamide, and N-t-butyl-2-benzothiazylsulfenamide; guanidine-based vulcanization accelerators such as diphenylguanidine; thiuram-based vulcanization accelerators such as tetramethylthiuram disulfide (TMTD), tetrabutylthiuram disulfide, tetradodecylthiuram disulfide, tetraoctylthiuram disulfide, and tetrabenzylthiuram disulfide; and the like. One of these vulcanization accelerators may be used alone, or two or more thereof may be used in combination. In the present invention, a benzothiazole-based vulcanization accelerator can be suitably used. The blending amount of the vulcanization accelerator is preferably 0.5 to 10 parts by mass, and more preferably 1 to 5 parts by mass, relative to 100 parts by mass of the rubber component in the vibration-damping rubber composition, from the viewpoint of ensuring workability during production of vibration-damping rubber and achieving the desired hardness, for example.

In addition to the above-described components, the vibration-damping rubber composition of the present invention may further contain a vulcanization accelerator aid other than zinc oxide, a crosslinking agent, a scorch retarder, an oil, an anti-aging agent, and the like, which are commonly used in vibration-damping rubber compositions. These components may be added in the first step or in the second step. However, it is preferable to add components other than the scorch retarder in the first step and to add the scorch retarder in the second step.

Examples of the vulcanization accelerator aid other than zinc oxide include fatty acids and the like. The fatty acids may be saturated or unsaturated, linear or branched, and the number of carbon atoms is not particularly limited. Examples of the fatty acids include those having 1 to 30 carbon atoms, and preferably 15 to 30 carbon atoms. More specifically, cyclohexanoic acid (cyclohexanecarboxylic acid); naphthenic acids such as alkylcyclopentanes having side chains; saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid); unsaturated fatty acids such as methacrylic acid, oleic acid, linoleic acid, and linolenic acid; resin acids such as rosin, tall oil acid, and abietic acid; and the like may be used. One of these vulcanization accelerator aids may be used alone, or two or more thereof may be used in combination. In the present invention, zinc white and stearic acid can be suitably used. With respect to the blending amount of the vulcanization accelerator aid, the total blending amount of the vulcanization accelerator aid and zinc oxide is preferably 1 to 10 parts by mass, and more preferably 2 to 8 parts by mass, relative to 100 parts by mass of the rubber component in the vibration-damping rubber composition, from the viewpoint of ensuring workability during production of vibration-damping rubber and achieving the desired hardness, for example.

Examples of the crosslinking agent include bismaleimide compounds, phenolic resins, and the like. Examples of the bismaleimide compounds include N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, bis(3-ethyl-5-methyl-4-maleimidephenyl)methane, and the like. In the present invention, a bismaleimide compound is preferred from the viewpoint of storage stability. The blending amount of such bismaleimide compound is preferably 0.5 to 5 parts by mass, and more preferably 0.5 to 3 parts by mass, relative to 100 parts by mass of the rubber component in the vibration-damping rubber composition.

Examples of the scorch retarder include organic acids such as phthalic anhydride, salicylic acid, and benzoic acid; N-(cyclohexylthio)phthalimide; sulfonamide derivatives; and the like. One of these scorch retarders may be used alone, or two or more thereof may be used in combination. The blending amount of the scorch retarder is preferably 0.1 to 5 parts by weight, and more preferably 0.5 to 2 parts by weight, relative to 100 parts by weight of the rubber component in the vibration-damping rubber composition.

Examples of the oil include process oils such as aromatic oil, naphthenic oil, and paraffin oil; vegetable oils such as palm oil; synthetic oils such as alkylbenzene oil; castor oil; and the like. One of these oils may be used alone, or two or more thereof may be used in combination. The blending amount of the oil is preferably 0.5 to 10 parts by mass, and more preferably 1 to 5 parts by mass, relative to 100 parts by mass of the rubber component in the vibration-damping rubber composition.

Examples of the anti-aging agent include phenolic anti-aging agents, imidazole-based anti-aging agents, amine-based anti-aging agents, waxes, and the like. One of these anti-aging agents may be used alone, or two or more thereof may be used in combination. The blending amount of the anti-aging agent is preferably 0.5 to 10 parts by mass, more preferably 1 to 5 parts by mass, and even more preferably 1 to 3 parts by mass, relative to 100 parts by mass of the rubber component in the vibration-damping rubber composition.

In addition, additives that are commonly used in rubber products, such as an antioxidant, a foaming agent, a plasticizer, a lubricant, a tackifier, a petroleum-based resin, an ultraviolet absorber, a dispersant, a compatibilizer, and a homogenizer, may be appropriately contained as needed, provided that the effects of the present invention are not impaired.

The vibration-damping rubber composition of the present invention can be used as a vibration-damping rubber member after vulcanization and molding. Although not particularly limited, the vibration-damping rubber composition is typically cured into a vibration-damping rubber member through vulcanization at 140°C to 180°C for 5 to 120 minutes. Since this vibration-damping rubber member is produced using the vibration-damping rubber composition of the present invention described above, the vibration-damping rubber member has a low dynamic-to-static modulus ratio and exhibits excellent vibration-damping properties, and can thus be suitably used in engine mounts, suspension bushings, subframe mounts, and the like for automobiles.

### Examples

Hereinafter, examples and comparative examples will be provided to describe the present invention in further detail; however, the present invention is not limited to these examples.

### Comparative Examples 1 and 2

The first step was carried out as follows. In accordance with the formulation (parts by mass) shown in Table 1, all components except the vulcanizing agent, vulcanization accelerator CZ, and Retarder were charged into a Banbury mixer and kneaded. When the temperature reached the value specified in Table 1, the mixture was discharged. Thus, a first kneaded product was obtained. Next, the second step was carried out as follows. The vulcanizing agent, vulcanization accelerator CZ, and scorch retarder were added to the obtained first kneaded product, and the mixture was kneaded for 1 minute while maintaining the temperature below 110°C. Thus, a vibration-damping rubber composition was produced.

### Comparative Examples 3 to 5 and Examples 1 to 3

The first step was carried out as follows. In accordance with the formulation (parts by mass) shown in Table 1, all components except the vulcanizing agent, vulcanization accelerator CZ, Retarder, and zinc oxide were charged into a Banbury mixer and kneaded. When the temperature reached the value specified in Table 1, the mixture was discharged. Thus, a first kneaded product was obtained. Next, the second step was carried out as follows. The vulcanizing agent, vulcanization accelerator CZ, scorch retarder, and zinc oxide were added to the obtained first kneaded product, and the mixture was kneaded for 1 minute while maintaining the temperature below 110°C. Thus, a vibration-damping rubber composition was produced.

### Evaluation of Processability

The vibration-damping rubber compositions obtained in the above-described comparative examples and examples were evaluated for processability by measuring the Mooney viscosity at 170°C in conformity with JIS K 6300-1, and calculating relative values, with the measured value of Comparative Example 1 set to 100. A relative Mooney viscosity value of less than 120 was represented by A (indicating good), while a value of 120 or more was represented by B (indicating poor). Table 1 shows the results.

### Evaluation of Vibration-Damping Properties

The vibration-damping rubber compositions obtained in the above-described comparative examples and examples were press-vulcanized under the conditions of 155°C for 30 minutes to produce cylindrical test specimens (vibration-damping rubber members) having a diameter of 30 mm and a height of 30 mm. Using these test specimens, support performance and vibration-damping performance were evaluated.

### • Support Performance

The static spring constant (Ks) was measured in conformity with JIS K 6385 using the bidirectional loading method in the static characteristics test. A displacement speed of 20 mm/min was applied in a direction perpendicular to the axis of each test specimen, and deflection within the range of 0 mm to +4.5 mm was loaded three times. The load-deflection relationship during the third loading cycle was measured. Using this relationship, the static spring constant was calculated in accordance with the calculation method specified in the standard, based on the deflection range of 1.5 to 3.0 mm.

Support performance was evaluated based on relative values, with Ks of Comparative Example 1 set to 100. A higher numerical value indicates better support performance. Table 1 shows the results.

### • Vibration-Damping Properties

The dynamic spring constant at 100 Hz (Kd100) was measured in conformity with JIS K 6385 using the non-resonance method in the dynamic property measurement test. Under a load that caused a deflection of 10% (3 mm), the test specimen was subjected to vibrations in a direction perpendicular to the axis of the test specimen at a frequency of 100 Hz and an amplitude of ±0.05 mm, and the measurement was conducted under these conditions.

The dynamic-to-static modulus ratios at 100 Hz (Kd100/Ks) were calculated from the absolute values of Ks and Kd100, and vibration-damping properties were evaluated based on relative values, with the dynamic-to-static modulus ratio of Comparative Example 1 set to 100. A relative value of the dynamic-to-static modulus ratio at 100 Hz of less than 100 was represented by A (indicating good), while a value of 100 or more was represented by B (indicating poor). A lower numerical value indicates better vibration-damping properties. Table 1 shows the results.

### • High-Frequency Vibration-Damping Properties

The vibration-damping rubber compositions obtained in the above-described comparative examples and examples were press-vulcanized under the conditions of 155°C for 15 minutes to produce cylindrical test specimens (vibration-damping rubber members) having a diameter of 8 mm and a height of 5.9 mm. These test specimens were used for viscoelasticity measurement. The measurement was conducted using ARES-G2 from TA Instruments, in conformity with JIS K 7244-1, at a strain of 0.1%, under temperature conditions ranging from -40°C to 40°C (at intervals of 10°C). A master curve was created by applying the temperature-time superposition principle (WLF principle), with frequency plotted on the horizontal axis and storage modulus on the vertical axis. From the master curve, the storage moduli at 2000 Hz and 100 Hz were read, and the ratio of these values was multiplied by the dynamic-to-static modulus ratio at 100 Hz (Kd100/Ks) to calculate the dynamic-to-static modulus ratio at 2000 Hz (Kd2k/Ks). High-frequency vibration-damping properties were evaluated based on relative values, with the value of Comparative Example 1 set to 100. A lower numerical value indicates better high-frequency vibration-damping properties. Table 1 shows the results.

The results of the overall evaluation based on the evaluation of processability and the evaluation of vibration-damping properties are shown in Table 1. A (indicating good) was assigned when both the evaluation of processability and the evaluation of vibration-damping properties were represented by A. B (indicating somewhat poor) was assigned when either the evaluation of processability or the evaluation of vibration-damping properties was represented by B. Table 1 shows the results.

The details of each component in Table 1 are as follows:
Natural rubber: "RSS#4";
Carbon black: FEF-grade carbon black, "Asahi #65" manufactured by Asahi Carbon Co., Ltd.;
Hydrazide compound BMH: "BMH" manufactured by Otsuka Chemical Co., Ltd., N'-(1,3-dimethylbutylidene)-3-hydroxy-2-naphthohydrazide;
Hydrazide compound IDH: "IDH" manufactured by Otsuka Chemical Co., Ltd., isophthalic acid dihydrazide;
Stearic acid: "Stearic acid 50S" manufactured by New Japan Chemical Co., Ltd.;
Wax: "SUNTIGHT S" manufactured by Seiko Chemical Co., Ltd.;
Anti-aging agent RD: "Nocrac RD" manufactured by OUCHI SHINKO CHEMICAL INDUSTRIAL CO., LTD.;
Anti-aging agent 6C: "Nocrac 6C" manufactured by OUCHI SHINKO CHEMICAL INDUSTRIAL CO., LTD.;
Oil: "SUNTHENE 4240" manufactured by SUNOCO, Inc.;
Zinc oxide: "Ginrei SR" manufactured by Toho Zinc Co., Ltd.;
Vulcanizing agent: "Powder Sulfur" manufactured by Tsurumi Chemical Industry Co., Ltd.;
Vulcanization accelerator CZ: "Nocceler CZ-G" manufactured by OUCHI SHINKO CHEMICAL INDUSTRIAL CO., LTD.; and
Scorch retarder: "Retarder CTP" manufactured by OUCHI SHINKO CHEMICAL INDUSTRIAL CO., LTD.

**[Table 1]**

| | | Com. Ex. 1 | Com. Ex. 2 | Com. Ex. 3 | Com. Ex. 4 | Ex. 1 | Ex. 2 | Ex. 3 | Com. Ex. 5 |
|---|---|---|---|---|---|---|---|---|---|
| a | Natural rubber | 100 | 100 | 100 | 100 | 100 | 100 | 100 | 100 |
| b | Carbon black | 42 | 42 | 42 | 42 | 42 | 42 | 42 | 42 |
| c | Hydrazide compound BMH | | 1 | | 1 | 1 | 1 | 1 | |
| | Hydrazide compound IDH | | | | | | | | 1 |
| | Stearic acid | 2 | 2 | 2 | 2 | 2 | 2 | 2 | 2 |
| | Wax | 1.5 | 1.5 | 1.5 | 1.5 | 1.5 | 1.5 | 1.5 | 1.5 |
| | Anti-aging agent RD | 0.4 | 0.4 | 0.4 | 0.4 | 0.4 | 0.4 | 0.4 | 0.4 |
| | Anti-aging agent 6C | 1.5 | 1.5 | 1.5 | 1.5 | 1.5 | 1.5 | 1.5 | 1.5 |
| | Oil | 2 | 2 | 2 | 2 | 2 | 2 | 2 | 2 |
| d | Zinc oxide | 5 | 5 | 5 | 5 | 5 | 5 | 5 | 5 |
| e | Vulcanizing agent | 2 | 2 | 2 | 2 | 2 | 2 | 2 | 2 |
| f | Vulcanization accelerator CZ | 1.6 | 1.6 | 1.6 | 1.6 | 1.6 | 1.6 | 1.6 | 1.6 |
| | Scorch retarder | 0.2 | 0.2 | 0.2 | 0.2 | 0.2 | 0.2 | 0.2 | 0.2 |
| Step in which zinc oxide was charged | | First step | First step | Second step | Second step | Second step | Second step | Second step | Second step |
| Heating temperature in first step/°C | | 120 | 140 | 140 | 120 | 130 | 140 | 160 | 160 |
| Mooney viscosity [index] | | 100 | 100 | 100 | 110 | 110 | 105 | 105 | 140 |
| Evaluation of processability | | A | A | A | A | A | A | A | B |
| Support performance [index] | | 100 | 110 | 102 | 105 | 105 | 98 | 103 | 94 |
| Vibration-damping properties [index] | | 100 | 114 | 100 | 101 | 98 | 90 | 91 | 88 |
| High-frequency vibration-damping properties [index] | | 100 | - | - | - | - | 90 | 86 | 83 |
| Evaluation of vibration-damping properties | | B | B | B | B | A | A | A | A |
| Overall evaluation | | B | B | B | B | A | A | A | B |

A comparison between Example 2 and Comparative Example 2, which had the same heating temperature in the first step, shows that the vibration-damping rubber member obtained from the vibration-damping rubber composition of Example 2, where zinc oxide was not added in the first step but was added in the second step, exhibited good vibration-damping properties, whereas the vibration-damping rubber member obtained from the vibration-damping rubber composition of Comparative Example 2, where zinc oxide was added in the first step, exhibited poor vibration-damping properties. These results indicate that vibration-damping properties can be improved by kneading a rubber component, carbon black, and a hydrazide compound without adding zinc oxide.

The vibration-damping rubber members obtained from the vibration-damping rubber compositions of Examples 1 to 3, where the kneading temperature in the first step was 130°C to 160°C, exhibited good vibration-damping properties. In contrast, the vibration-damping rubber member obtained from the vibration-damping rubber composition of Comparative Example 4, where the kneading temperature in the first step was 120°C, exhibited poor vibration-damping properties, even though zinc oxide was not added in the first step but was added in the second step. These results indicate that vibration-damping properties can be improved by setting the kneading temperature in the first step to 130°C or higher.

The vibration-damping rubber composition of Example 3, which used a monofunctional hydrazide compound, exhibited good processability, whereas the vibration-damping rubber composition of Comparative Example 5, which used a bifunctional dihydrazide compound, had a high Mooney viscosity and exhibited poor processability. These results indicate that the use of a monofunctional hydrazide compound can improve vibration-damping properties without impairing processability.

### Example 4

A vibration-damping rubber composition was produced and evaluated in the same manner as in Example 3, except that half the amount of carbon black was replaced with silica ("Nipsil AQ" manufactured by Tosoh Silica Corporation), and 2.1 parts by mass of a silane coupling agent ("Si 69" manufactured by Evonik) was added in the first step. Table 2 shows the results.

### Comparative Example 6

A vibration-damping rubber composition was produced and evaluated in the same manner as in Comparative Example 5, except that half the amount of carbon black was replaced with silica ("Nipsil AQ" manufactured by Tosoh Silica Corporation), and 2.1 parts by mass of a silane coupling agent ("Si 69" manufactured by Evonik) was added in the first step. Table 2 shows the results.

**[Table 2]**

| | | Ex. 4 | Com. Ex. 6 |
|---|---|---|---|
| a | Natural rubber | 100 | 100 |
| b | Carbon black | 21 | 21 |
| | Silica | 21 | 21 |
| c | Hydrazide compound BMH | 1 | |
| | Hydrazide compound IDH | | 1 |
| | Stearic acid | 2 | 2 |
| | Wax | 1.5 | 1.5 |
| | Anti-aging agent RD | 0.4 | 0.4 |
| | Anti-aging agent 6C | 1.5 | 1.5 |
| | Oil | 2 | 2 |
| | Silane coupling agent | 2.1 | 2.1 |
| d | Zinc oxide | 5 | 5 |
| e | Vulcanizing agent | 2 | 2 |
| f | Vulcanization accelerator CZ | 1.6 | 1.6 |
| | Scorch retarder | 0.2 | 0.2 |
| Step in which zinc oxide was charged | | Second step | Second step |
| Heating temperature in first step/°C | | 160 | 160 |
| Mooney viscosity [index] | | 115 | 220 |
| Evaluation of processability | | A | B |
| Support performance [index] | | 95 | 90 |
| Vibration-damping properties [index] | | 80 | 75 |
| High-frequency vibration-damping properties [index] | | 80 | 75 |
| Evaluation of vibration-damping properties | | A | A |
| Overall evaluation A B | | | |

As shown in Table 2, it can be seen that even when half the amount of carbon black is replaced with silica, the same effects as when only carbon black is used can be achieved.

### Industrial Applicability

According to the present invention, it is possible to provide a vibration-damping rubber composition that enables the production of a vibration-damping rubber member having a low dynamic-to-static modulus ratio and excellent vibration-damping properties and also exhibits excellent processability, as well as a method for producing the same.

## Claims

1. A vibration-damping rubber composition obtained in accordance with a production method comprising:
a first step of kneading a component a, a component b, and a component c below at a temperature of 130°C or higher and 180°C or lower to obtain a first kneaded product, and
a second step of kneading the first kneaded product with a component d below to obtain a second kneaded product,
wherein the component a is a diene-based rubber,
the component b is a filler containing carbon black,
the component c is a hydrazide compound represented by a formula (1) or (2) below; and
the component d is zinc oxide: 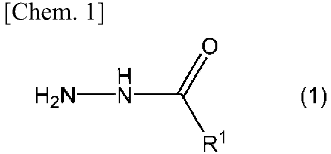
where R¹ represents an alkyl group having 1 to 20 carbon atoms or an aryl group having 6 to 20 carbon atoms; and 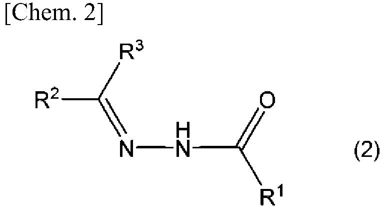
where R¹ represents an alkyl group having 1 to 20 carbon atoms or an aryl group having 6 to 20 carbon atoms, and
R² and R³ each independently represent an alkyl group having 1 to 20 carbon atoms.

2. The vibration-damping rubber composition according to claim 1, wherein a blending amount of the component c is 0.1 to 10 parts by mass relative to 100 parts by mass of the component b.

3. The vibration-damping rubber composition according to claim 1, wherein the component a contains natural rubber in an amount of 50 mass% or more.

4. The vibration-damping rubber composition according to claim 1, wherein a kneading time in the first step is 1 minute or longer and 10 minutes or shorter.

5. A method for producing a vibration-damping rubber composition, the method comprising
a first step of kneading a component a, a component b, and a component c below at a temperature of 130°C or higher and 180°C or lower to obtain a first kneaded product, and
a second step of kneading the first kneaded product with a component d below to obtain a second kneaded product,
wherein the component a is a diene-based rubber,
the component b is a filler containing carbon black,
the component c is a hydrazide compound represented by a formula (1) or (2) below; and
the component d is zinc oxide: 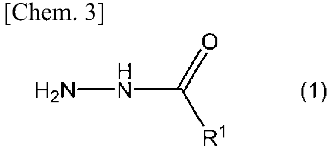
where R¹ represents an alkyl group having 1 to 20 carbon atoms or an aryl group having 6 to 20 carbon atoms; and 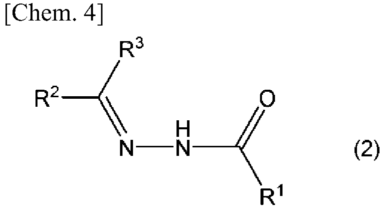
where R¹ represents an alkyl group having 1 to 20 carbon atoms or an aryl group having 6 to 20 carbon atoms, and
R² and R³ each independently represent an alkyl group having 1 to 20 carbon atoms.

6. The method for producing a vibration-damping rubber composition according to claim 5, wherein a kneading time in the first step is 1 minute or longer and 10 minutes or shorter.
